# EUROPEAN PATENT APPLICATION

(11) **EP 1 403 946 A2**
(43) Date of publication of application: **31.03.2004**
(21) Application number: 03400043.0
(22) Date of filing: 13.08.2003
(51) Int. Cl.: H01M 4/68, C22C 11/06

(54) **Alloy for battery grids**

(30) Priority: 13.08.2002 US 217949
(71) Applicant: Johnson Controls Technology Company, Plymouth, Michigan 48170 (US)
(72) Inventor: Schaeffer, Charles J., Wauwatosa Wisconsin 53213 (US)
(74) Representative: UEXKÜLL & STOLBERG

(57) **Abstract**

A lead alloy for a grid for a battery is disclosed. The alloy includes calcium in an amount of about 0.05 percent by weight to about 0.0725 percent by weight, tin in an amount of about 1.2 percent by weight to about 1.8 percent by weight, silver in an amount of greater than about 0.001 percent by weight, and bismuth in an amount of about 0.0005 percent by weight to less than about 0.04 percent by weight. An alloy for a grid for a battery is also disclosed having calcium in an amount of about 0.05 percent by weight to about 0.07 percent by weight, tin in an amount of about 1.2 percent by weight to about 1.5 percent by weight, silver in an amount of greater than about 0.001 percent by weight and bismuth in an amount of greater than about 0.0115 percent by weight.

## Description

### FIELD

The present invention relates generally to the field of lead alloys. The present invention relates more specifically to a lead alloy for a battery grid having calcium, tin and bismuth.

### BACKGROUND

Batteries (e.g. lead-acid electric storage batteries) typically include cell elements having positive and negative grids or plates and separators between the grids. The grids are typically made of a lead alloy that includes various alloying elements intended to improve performance, life and/or manufacturability of the grids and battery.

It is generally known to provide any of a variety of alloying elements to improve performance, life, and/or manufacturability of battery grids. For example, it is known to add calcium to the alloy to increase hardness, which may improve grid manufacturability. Calcium in certain amounts, however, may result in increased corrosion of the grid due to formation of precipitated Pb₃Ca, or may result in increased grid growth due to premature overaging.

It is also known to add silver to the alloy to increase mechanical strength (e.g. creep resistance) and hardening rate.
It is also known to add bismuth to the alloy. However, relatively high amounts of silver and/or bismuth may cause dressing or unfavorable grain structure. Further, relatively high amounts of bismuth may result in isolated regions of discontinuous precipitate in the grid (e.g. substantially non-hardening precipitates formed from the reaction of bismuth with lead and/or tin), which may negatively impact the life of such grid due to accelerated corrosion penetration and grid growth.

Accordingly, it would be advantageous to provide a lead alloy for use in a battery grid that has an acceptable corrosion rate and life. It would also be advantageous to provide a lead alloy for a battery grid that includes bismuth. It would also be advantageous to provide a lead alloy for a battery grid that has a relatively high hardness stability (i.e, resistance to overaging). It would be desirable to provide for an alloy for a battery grid having one or more of these advantageous features.

### DESCRIPTION OF THE FIGURES

FIGURE 1 shows a battery grid according to an exemplary embodiment.

FIGURE 2A shows a bar graph of the hardness stability integral of an alloy for a battery grid according to an exemplary embodiment.

FIGURE 2B shows a line graph of the hardness stability integral versus the amount of bismuth for of an alloy for a battery grid according to an exemplary embodiment.

FIGURE 3A shows a photograph of an alloy for a battery grid having bands of untransformed material according to an exemplary embodiment.

FIGURE 3B shows a photograph of the alloy of FIGURE 3A having bands of untransformed material according to an exemplary embodiment.

### SUMMARY OF THE INVENTION

The present invention relates to a lead alloy for a grid for a battery. The alloy includes calcium in an amount of about 0.05 percent by weight to about 0.0725 percent by weight. The alloy also includes tin in an amount of about 1.2 percent by weight to about 1.8 percent by weight. The alloy also includes silver in an amount of greater than about 0.001 percent by weight, The alloy also includes bismuth in an amount of about 0.0005 percent by weight to less than about 0.04 percent by weight, The balance of the alloy comprises lead.

The present invention also relates to an alloy for a grid for a battery. The alloy includes calcium in an amount of less than about 0,05 percent by weight to about 0.07 percent by weight. The alloy also includes tin in an amount of about 1.2 percent by weight to about 1.5 percent by weight. The' alloy also includes silver in an amount of greater than about 0.001 percent by weight. The alloy also includes bismuth in an amount of greater than about 0.0115 percent by weight. The balance of the alloy comprises lead.

The present invention also relates to a method of producing an alloy for use in a battery grid. The method includes alloying lead with calcium, tin, silver and bismuth. The alloy includes calcium in an amount less than about 0.05 percent by weight to about 0.0725 percent by weight. The alloy also includes tin in an amount of about 1.2 percent by weight to about 1.8 percent by weight. The alloy also includes silver in an amount of greater than about 0.001 percent by weight. The alloy also includes bismuth in an amount of 0.005 percent by weight to less than about 0.0275 percent by weight. The balance of the alloy includes lead.

### DETAILED DESCRIPTION OF PREFERRED AND OTHER EXEMPLARY EMBODIMENTS

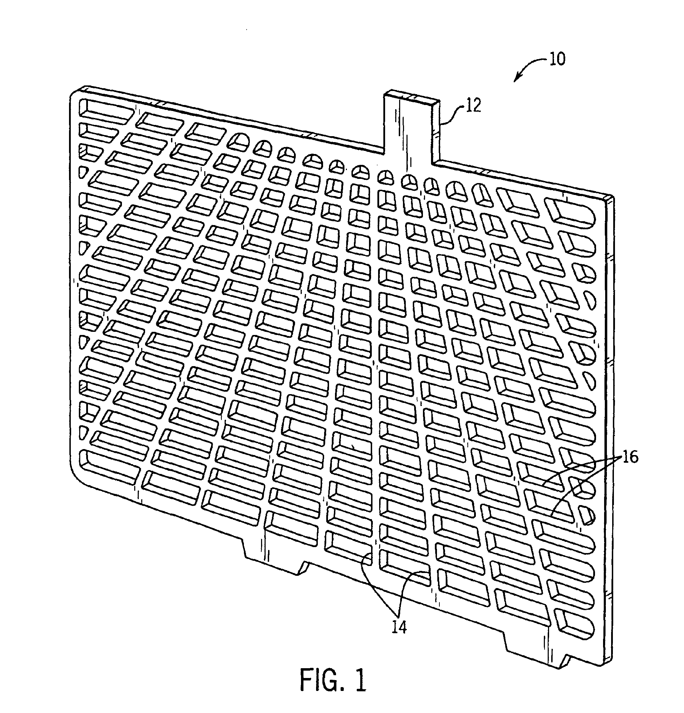

A battery plate or grid 10 is shown in FIGURE 1. The grid is a "stamped" or punched grid made from a wrought alloy according to a preferred embodiment, and may be made from a cast alloy according to an alternative embodiment. The grid is a "positive" grid for a lead-acid battery according to a preferred embodiment, and may be a "negative" grid according to an alternative embodiment. Grid 10 includes an electric current collection lug 12. Generally vertical wires 14 extend from lug 12. Generally horizontal wires 16 intersect vertical wires 14. The grid includes a lead alloy having calcium, tin and bismuth according to a preferred embodiment. The lead alloy may include silver according to an alternative embodiment.

The amount of calcium in the alloy is selected to provide suitable hardness of the alloy, which can aid in manufacturability of the alloy according to a preferred embodiment. Such suitable hardness of the alloy may eliminate the need for heat treatment of the alloy. The amount of calcium in the alloy should not be so great as to cause an unacceptable increase in corrosion rate or reduction in hardness stability. Aluminum may be included in the alloy (or in the melt pot of the alloy) to reduce the loss of calcium according to a preferred embodiment.

The alloy includes calcium in an amount greater than about 0.05 percent by weight according to a preferred embodiment. The alloy includes calcium in an amount of about 0.05 percent by weight to about 0.08 percent by weight according to an alternative embodiment, The alloy includes calcium in an amount of 0.055 percent by weight to about 0.075 percent by weight according to another alternative embodiment. The alloy includes calcium in an amount of about 0.05 percent by weight to about 0.07 percent by weight according to an alternative embodiment. The alloy includes calcium in an amount of 0.055 percent by weight to about 0.07 percent by weight according to an alternative embodiment. The alloy includes calcium in an amount of 0.06 percent by weight to about 0.07 percent by weight according to an alternative embodiment.

The amount of tin in the alloy is selected to reduce corrosion according to a preferred embodiment. Without intending to be limited to any particular theory, it is believed that tin will react with calcium to form Sn₃Ca (which provides corrosion resistance), and that the tin will inhibit the reaction of lead with calcium, thereby reducing the formation of discontinuous Pb₃Ca precipitate (which may promote grid growth).

The alloy includes tin in an amount of greater than about 1.2 percent by weight according to a preferred embodiment. The alloy includes tin in an amount of about 1.2 percent by weight to about 1.65 percent by weight according to an alternative embodiment. The alloy includes tin in an amount of about 1.2 percent by weight to about 1.5 percent by weight according to an alternative embodiment.

The ratio of tin to calcium is selected to minimize the formation of Pb₃Ca precipitate according to a preferred embodiment. The ratio of tin to calcium is greater than about 10 to 1 according to a preferred embodiment. The ratio of tin to calcium is greater than about 12 to 1 according to other preferred or alternative embodiments. The ratio of tin to calcium is greater than about 20 to 1 according to other preferred or alternative embodiments. For example, where the alloy has a calcium content of about 0.07 percent by weight, it is preferred that the tin content exceed about 0.84 percent by weight. Increasing the ratio of tin to lead may reduce "coarsening" of the precipitates in the grid by suppressing formation of precipitated Pb₃Ca, which in turn decreases grid growth and increases the life of the grids.

The amount of silver in the alloy is selected to increase mechanical strength, including creep strength of grain boundaries according to a preferred embodiment, The amount of silver in the alloy is also selected to increase the hardening rate of the alloy according to a preferred embodiment. According to an alternative embodiment, silver may be included in "trace" amounts or as an impurity that is present in "secondary" or recycled lead.

The alloy includes silver in an amount of about 0.0005 percent by weight to about 0.02 percent by weight according to a preferred embodiment. The alloy includes silver in an amount of about 0.001 percent by weight to about 0.015 percent by weight according to an alternative embodiment. The alloy includes silver in an amount of about 0.001 percent by weight to about 0.01 percent by weight according to an alternative embodiment. The alloy includes silver in an amount of about 0.001 percent by weight to about 0.005 percent by weight according to an alternative embodiment,

The amount of bismuth in the alloy is selected to provide an acceptable hardness stability (i.e. "microhardness") of the alloy. The' alloy includes bismuth in an amount of less than about 0.04 percent by weight according to a preferred embodiment. The alloy includes bismuth in an amount of about 0.0005 percent by weight to about 0.0275 percent by weight according to an alternative embodiment. The alloy includes bismuth in an amount of about 0.0005 percent by weight to about 0.025 percent by weight according to an alternative embodiment. The alloy includes bismuth in an amount of about 0.001 percent by weight to about 0.0225 percent by weight according to an alternative embodiment. The alloy includes bismuth in an amount of about 0.001 percent by weight to about 0.0190 percent by weight according to an alternative embodiment. The alloy includes bismuth in an amount of about 0.0115 percent by weight to about 0.0165 percent by weight according to an alternative embodiment. The alloy includes bismuth in an amount of about 0.0150 percent by weight according to a particularly preferred embodiment.

The alloy may include relatively low amounts of other materials according to any preferred or alternative embodiments. For example, the alloy may include background "impurities" or trace materials that are present in a commercially recycled lead stream. impurities in the alloy in the following amounts may be acceptable: (1) zinc in an amount of less than about 0.005 percent by weight according to an alternative embodiment, zinc in an amount of less than about 0.0025 percent by weight according to a preferred embodiment; (2). antimony in an amount of less than about 0,005 percent by weight according to an alternative embodiment, antimony in an amount of less than about 0.0025 percent by weight according to a preferred embodiment; (3) arsenic in an amount of less than about 0.0025 percent by weight according to a preferred embodiment; (4) copper in an amount of less than about 0.005 percent by weight according to an alternative embodiment, cooper in an amount of less than about 0.0025 percent by weight according to a preferred embodiment.

The alloy includes calcium in an amount of about 0.05 percent by weight and about 0.07 percent by weight, tin in an amount of about 1.2 percent by weight and about 1.5 percent by weight, and bismuth in an amount of 0.0005 to 0.0275 percent by weight according to an exemplary embodiment, with the balance being lead. Silver may optionally be included in the alloy in an amount less than about 0.015 percent by weight according to an alternative embodiment. The balance may also include additional elements that are present in recycled lead (e,g. bismuth, arsenic, copper, silver, tellurium, etc.) in limited amounts (e.g. less than approximately 0.0025 percent by weight for each impurity).

The alloy includes calcium in the amount of about 0.066 percent by weight, tin in an amount of about 1.35 percent by weight, silver in an about of about 0.0035 percent by weight, and bismuth in an amount of about 0.0005 percent by weight to about 0.0275 percent by weight, with the balance being lead and other additional elements that are present in recycled lead, according to a preferred embodiment.
The alloy may include calcium in the amount of about 0.0652 percent by weight, tin in an amount of about 1.35 percent by weight, silver in an about of about 0.0036 percent by weight, and bismuth in an amount of about 0.0005 percent by weight to about 0.0236 percent by weight, with the balance being lead and other additional elements that are present in recycled lead, according to a preferred embodiment.

The percent by weight of the various alloy elements (e.g. calcium, tin, silver, bismuth) may vary according to alternative embodiments. For example, according to an alternative embodiment, silver may be present in an amount between approximately 0.005 and 0.015 percent by weight. According to another alternative embodiment, tin may be present in an amount between approximately 1.2 percent by weight and about 1.8 percent by weight.

### EXAMPLES

Alloys A, B, C, D, E and F were prepared having calcium, tin, silver and bismuth (the balance being lead) in the amounts listed in TABLE 1 through TABLE 6.

**TABLE 1**

| | Alloy A |
|---|---|
| Calcium | 0.0645 percent by weight |
| Tin | 1.39 percent by weight |
| Silver | 0.0021 percent by weight |
| Bismuth | 0.0005 percent by weight |

**TABLE 2**

| | Alloy B1 | Alloy B2 |
|---|---|---|
| Calcium | 0.0652 percent by weight | 0.0672 percent by weight |
| Tin | 1.4 percent by weight | 1.38 percent by weight |
| Silver | 0.0038 percent by weight | 0.0038 percent by weight |
| Bismuth | 0.0005 percent by weight | 0.0005 percent by weight |

Alloys B1 and B2 are collectively referred to as Alloy B. The average amount of silver in Alloy B was 0.0021 percent by weight. The average amount of bismuth in Alloy B was 0.005 percent by weight.

**TABLE 3**

| | Alloy C |
|---|---|
| Calcium | 0.07 percent by weight |
| Tin | 1.38 percent by weight |
| Silver | 0.0035 percent by weight |
| Bismuth | 0.0005 percent by weight |

| TABLE 4 | |
|---|---|
| | Alloy D |
| Calcium | 0.069 percent by weight |
| Tin | 1.35 percent by weight |
| Silver | 0,0036 percent by weight |
| Bismuth | 0.0126 percent by weight |

| TABLE 5 | | |
|---|---|---|
| | Alloy E1 | Alloy E2 |
| Calcium | 0.0684 percent by weight | 0.0645 percent by weight |
| Tin | 1.37 percent by weight | 1.33 percent by weight |
| Silver | 0.0037 percent by weight | 0.0032 percent by weight |
| Bismuth | 0.0199 percent by weight | 0.0207 percent by weight |
| | | |

| | Alloy E2 | Alloy E4 |
|---|---|---|
| Calcium | 0.0654 percent by weight | 0.644 percent by weight |
| Tin | 1.33 percent by weight | 1.31 percent by weight |
| Silver | 0.0036 percent by weight | 0.0034 percent by weight |
| Bismuth | 0.0208 percent by weight | 0.0194 percent by weight |

Alloys E1, E2, E3 and E4 are collectively referred to as Alloy E. The average amount of silver in Alloy E was 0.0035 percent by weight.' The average amount of bismuth in Alloy E was 0.0202 percent by weight.

**TABLE 6**

| | Alloy F |
|---|---|
| Calcium | 0.0654 percent by weight |
| Tin | 1.37 percent by weight |
| Silver | 0.0037 percent by weight |
| Bismuth | 0.0236 percent by weight |

The alloys were cast as a slab and flattened (e.g. by a roller) to about 10 percent the original thickness of the slab. Grids for batteries each having a thickness of about 42 one-thousands of an inch were formed from the slab and stamped in a grid pattern, The grids were held at 85 degrees Celsius for 3 weeks, and then tested for hardness stability (i.e. diamond pyramid hardness or "DPH") using a diamond pyramid indentor. The load was 200 grams for 15 seconds for the hardness stability test. The hardness stability integral for each of Alloy A, B, C, D, E and F is shown in TABLE 7.

**TABLE 7**

| Alloy | Bismuth percent by weight (average) | Silver percent by weight (average) | Hardness Stability Integral (DPH * number weeks) |
|---|---|---|---|
| A | 0.0005 | 0.0021 | 52.4 |
| B | 0.0005 | 0.0035 | 52.4 |
| C | 0.0005 | 0.0040 | 55 |
| D | 0.0126 | 0.0035 | 60.4 |
| E | 0.0202 | 0.0035 | 55.1 |
| F | 0.0236 | 0.0035 | 58.5 |

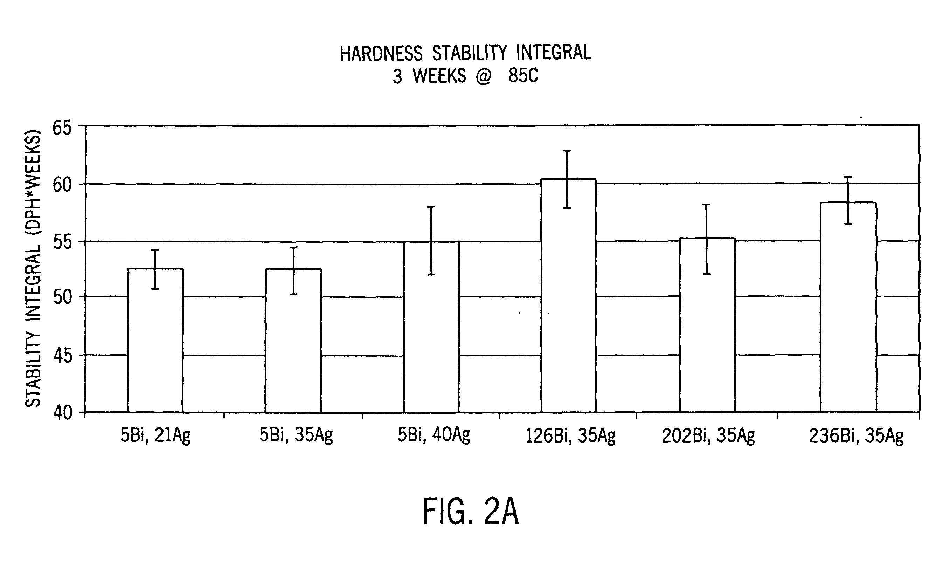

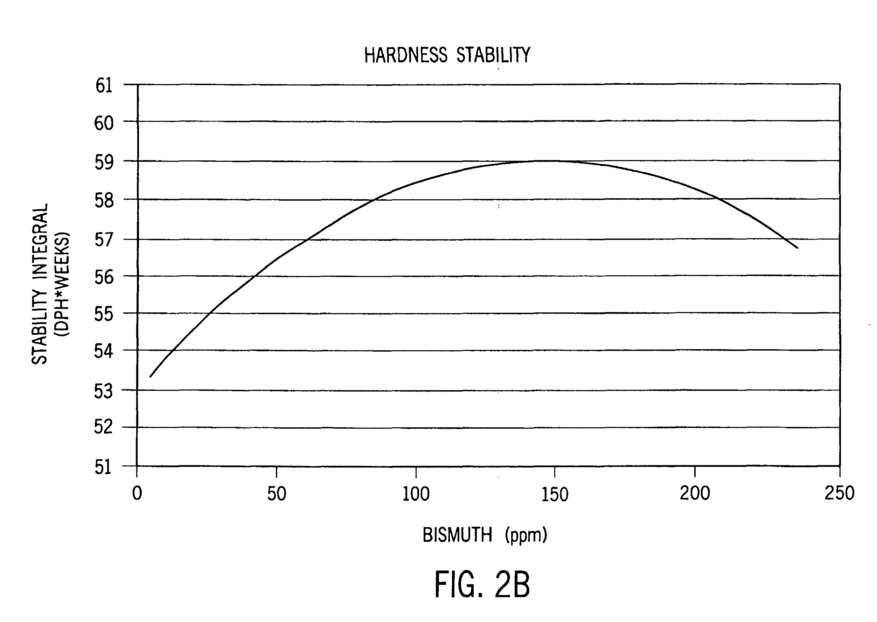

The hardness stability integral for each of Alloy A, B, C, D, E and F is shown in FIGURE 2A. FIGURE 2A shows that grids having bismuth in the amount of 0.0005 percent to 0.0236 percent by weight had a relatively acceptable hardness stability. FIGURE 2B shows the data of TABLE 7 fit to a curve according to a preferred embodiment.

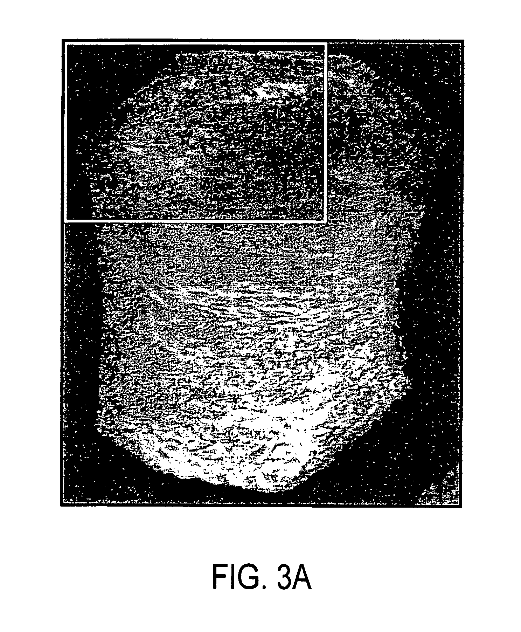

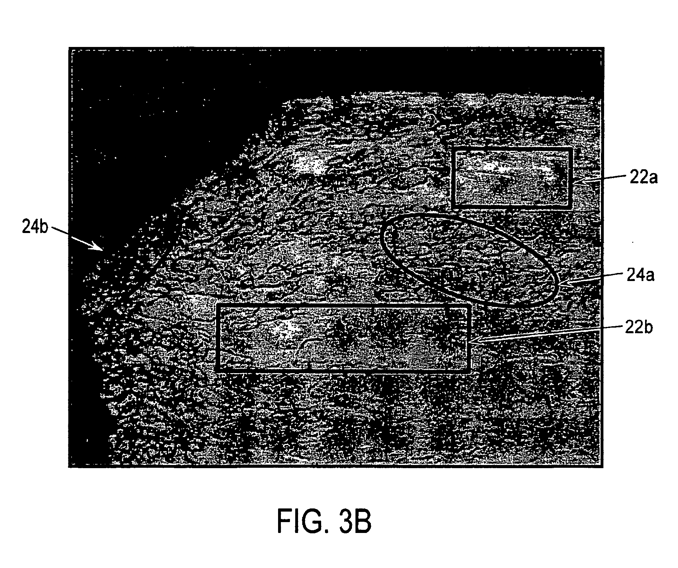

Alloy E2 was cast as a slab and flattened to about 10 percent the original thickness of the slab. Grids for batteries each having a thickness of about 42 one-thousandths of an inch were formed from the slab and stamped in a grid pattern. The grids were held at 85 degrees Celsius for 5 weeks. FIGURE 3A shows 75x magnification of a section of the grid. FIGURE 3B shows a detailed view of the section of the grid of FIGURE 3A. FIGURE 3B shows bands of untransformed material having a relatively high hardness (shown in rectangles 22a and 22b) and some bands of recrystalized material (shown in ovals 24a and 24b) .

It is important to note that the construction and arrangement of the elements of the alloy for a battery grid as shown in the preferred and other exemplary embodiments is illustrative only. Although only a few embodiments of the present inventions have been described in detail in this disclosure, those skilled in the art who review this disclosure will readily appreciate that many modifications are possible (e.g. variations in combinations and subcombinations of the amounts of the alloy elements) without materially departing from the novel teachings and advantages of the subject matter recited in the claims. For example, elements may be substituted and added, and the amounts of the elements may vary. Accordingly, all such modifications are intended to be included within the scope of the present invention as defined in the appended claims. The order or sequence of any process or method steps may be varied or re-sequenced according to alternative embodiments. In the claims, any means-plus-function clause is intended to cover the structures described herein as performing the recited function and not only structural equivalents but also equivalent structures. Other substitutions, modifications, changes and omissions may be made in the design, operating conditions and arrangement of the preferred and other exemplary embodiments without departing from the spirit of the present inventions as expressed in the appended claims.

## Claims

1. A lead alloy for a grid for a battery consisting essentially of:
calcium in an amount of about 0.05 percent by weight to about 0.0725 percent by weight;
tin in an amount of about 1.2 percent by weight to about 1.8 percent by weight;
silver in an amount of greater than about 0.001 percent by weight;
bismuth in an amount of about 0.0005 percent by weight to less than about 0.04 percent by weight;
wherein the balance of the alloy comprises lead.

2. The alloy of Claim 1 wherein the calcium is in an amount of about 0.055 percent by weight to about 0.07 percent by weight.

3. The alloy of Claim 2 wherein the calcium is in an amount of about 0.06 percent by weight to about 0.07 percent by weight.

4. The alloy of Claim 1 wherein the tin is in an amount of about 1.2 percent by weight to about 1.65 percent by weight.

5. The alloy of Claim 1 wherein the ratio of the calcium to the tin is greater than about 12 to 1.

6. The alloy of Claim 1 wherein the silver is in an amount of about 0.001 percent by weight to about 0.015 percent by weight.

7. The alloy of Claim 6 wherein the silver is in an amount of about 0.001 percent by weight to about 0.01 percent by weight.

8. The alloy of Claim 7 wherein the silver is in an amount of about 0.001 percent by weight to about 0.005 percent by weight.

9. The alloy of Claim 8 wherein the bismuth is in an amount of about 0.0005 percent by weight.to about 0.0275 percent by weight.

10. The alloy of Claim 9 wherein the bismuth is in an amount of about 0.0005 percent by weight to about 0.0225 percent by weight.

11. The alloy of Claim 10 wherein the bismuth is in an amount of about 0.001 percent by weight to about 0.0.190 percent by weight.

12. The alloy of Claim 11 wherein the bismuth is in an amount of greater than about 0.0115 percent by weight.

13. An alloy for a grid for a battery consisting essentially of:
calcium in an amount of about 0.05 percent by weight to about 0.07 percent by weight;
tin in an amount of about 1.2 percent by weight to about 1.5 percent by weight;
silver in an amount of greater than about 0.001 percent by weight;
bismuth in an amount of greater than about 0.0115 percent by weight ;
wherein the balance of the alloy comprises lead.

14. The alloy of Claim 13 wherein the silver is in an amount of about 0.001 percent by weight to about 0.015 percent by weight.

15. The alloy of Claim 14 wherein the silver is in an amount of about 0.001 percent by weight to about 0.01 percent by weight.

16. The alloy of Claim 15 wherein the silver is in an amount of about 0.001 percent by weight to about 0.005 percent by weight.

17. The alloy of Claim 14 wherein the bismuth is in an amount of less than about 0.0275 percent by weight.

18. The alloy of Claim 17 wherein the bismuth is in an amount of less than about 0.0225 percent by weight.

19. The alloy of Claim 18 wherein the bismuth is in an amount of less than about 0.019 percent by weight.

20. The alloy of Claim 19 wherein the bismuth is in an amount of about 0.015 percent by weight to about 0.0165 percent by weight.

21. A method of producing an alloy for use in a battery grid comprising :
alloying lead with calcium, tin, silver and bismuth;
wherein the alloy consists essentially of:
calcium in an amount about 0.05 percent by weight to about 0.0725 percent by weight;
tin in an amount of about 1.2 percent by weight to about 1.8 percent by weight;
silver in an amount of greater than about 0.001 percent by weight;
bismuth in an amount of 0.0005 percent by weight to less than about 0.0275 percent by weight;
the balance of the alloy comprising lead.
